# EUROPÄISCHE PATENTSCHRIFT

(11) **EP 4 246 004 B1**
(45) Veröffentlichungstag und Bekanntmachung des Hinweises auf die Patenterteilung: **16.10.2024**
(21) Anmeldenummer: 23159292.4
(22) Anmeldetag: 01.03.2023
(51) Int. Cl.: F16B 13/12

(54) **SPREIZDÜBEL UND BEFESTIGUNGSSYSTEM**
EXPANSION DOWEL AND FASTENING SYSTEM
CHEVILLE À EXPANSION ET SYSTÈME DE FIXATION

(30) Priorität: 18.03.2022 DE 102022106344; 14.12.2022 DE 102022133241
(43) Veröffentlichungstag der Anmeldung: 20.09.2023
(73) Patentinhaber: fischerwerke GmbH & Co. KG, 72178 Waldachtal (DE)
(72) Erfinder: Frey, Christian, 72250 Freudenstadt-Wittlensweiler (DE)
(74) Vertreter: Suchy, Ulrich Johannes

(56) Entgegenhaltungen:
- EP-B1- 0 684 395
- WO-A1-2014/079546
- CH-A5- 620 503
- DE-U1- 9 403 197

## Beschreibung

Die Erfindung betrifft einen Spreizdübel aus Kunststoff mit den Merkmalen des Oberbegriffs des Anspruchs 1 sowie ein Befestigungssystem mit einem Spreizdübel gemäß dem Oberbegriff des Anspruchs 12.

Ein solcher Spreizdübel nach dem Oberbegriff des Anspruchs 1 ist aus der DE 9403197 U bekannt.

Derartige Spreizdübel werden typischerweise zum Befestigen von Bauteilen an einem Verankerungsgrund, beispielsweise einer Wand aus Beton oder Mauerwerk, verwendet. Hierzu wird der Spreizdübel in ein Bohrloch im Verankerungsgrund gesteckt und ein Spreizbereich des Spreizdübels durch einen Spreizkörper, wie beispielsweise ein Nagel oder eine Schraube, aufgespreizt. Der Spreizkörper wird hierzu in einen Spreizkanal des Spreizdübels eingebracht. Beispielsweise wird der Spreizdübel durch das Einschrauben einer Schraube oder das Eintreiben eines Nagels aufgespreizt, wodurch die Spreizelemente des Spreizdübels durch den eingebrachten Spreizkörper gegen die Wand des Bohrlochs gedrückt werden und der Spreizdübel somit im Bohrloch gehalten ist.

Aus der Patentanmeldung US 2021/0079941 A1 ist ein gattungsgemäßer Spreizdübel bekannt, der einen Spreizbereich mit zwei Spreizelementen aufweist, die durch das Einbringen eines Spreizkörpers in einen Spreizkanal des Spreizdübels aufspreizbar sind. An einem in Einbringrichtung vorderen Ende sind die beiden Spreizelemente durch einen stegartigen Verbinder einstückig miteinander verbunden. Dieser Verbinder verhindert, dass die beiden Spreizelemente bereits beim Einführen in ein Bohrloch durch Reibung an der Wand des Bohrlochs nach außen aufspreizen und dadurch das Einführen des Spreizdübels in das Bohrloch erschweren oder verhindern. Beim Einbringen des Spreizkörpers in den Spreizkanal werden die beiden Spreizelemente radial zu einer Längsachse des Spreizdübels nach außen und voneinander weggedrückt, wodurch der Verbinder auf Zug belastet wird, bis er unter Zugbelastung reißt. Da der Verbinder aus Kunststoff ist und damit relativ große Zugkräfte aufnehmen kann, sind, im Vergleich zu Spreizdübeln ohne Verbinder, zum Verspreizen relativ hohe Spreizkräfte erforderlich.

Diese wiederum erfordern relativ große Axialkräfte zum Eintreiben eines Nagels oder ein relativ großes Drehmoment zum Einschrauben einer Schraube, was die Anwendung des Spreizdübels erschwert.

Aufgabe der Erfindung ist es daher, einen Spreizdübel zu schaffen, dessen Montagefreundlichkeit verbessert ist.

Diese Aufgabe wird erfindungsgemäß durch einen Spreizdübel mit den Merkmalen des Anspruchs 1 und ein Befestigungssystem mit einem derartigen Spreizdübel gemäß Anspruch 12 gelöst.

Der erfindungsgemäße Spreizdübel ist aus Kunststoff hergestellt, wobei der Spreizdübel aus einer Kunststoffkomponente, also aus einem Kunststoff, wie beispielsweise Polyamid, oder aus mehreren Kunststoffkomponenten, wie beispielsweise Polyamid und Polypropylen, bestehen kann. Dies schließt nicht aus, dass der Spreizdübel Elemente umfasst, die nicht aus Kunststoff sind, sondern beispielsweise aus Metall. Der Spreizdübel ist insbesondere ein Spritzgussteil, das im Ein- oder Mehrkomponentenspritzgussverfahren hergestellt ist und das beispielsweise ein an- oder eingespritztes Einlegeteil aufweisen kann.

Der Spreizdübel weist einen Spreizbereich mit mindestens zwei Spreizelementen auf, die durch einen Schlitz voneinander getrennt sind. Der Spreizbereich kann verschiedene Abschnitte aufweisen, und seine Gestaltung, beziehungsweise die der Spreizelemente, kann in Längs- und/oder Umfangsrichtung variieren. Im Spreizbereich ist ein Spreizkanal angeordnet, der sich konzentrisch zu und entlang einer Mittellängsachse des Spreizdübels erstreckt. Die Mittellängsachse verläuft parallel zu einer Einbringrichtung, in die der Spreizdübel planmäßig in ein Bohrloch eingebracht wird. Sie ist konzentrisch zu in den Spreizkanal eingeschriebenen Inkreisen und definiert die axiale Richtung beziehungsweise die Längsrichtung des Spreizdübels. Insbesondere umschließen die Spreizelemente den Spreizkanal zumindest teilweise, insbesondere im Wesentlichen vollständig, insbesondere bis auf einen Schlitz oder mehrere Schlitze zwischen den Spreizelementen. Die Spreizelemente sind durch einen Schlitz voneinander getrennt, der eine Medianebene zwischen den Spreizelementen definiert, in der die Längsachse liegt. Der Schlitz kann den Spreizbereich vollständig durchdringen oder auch nur von radial außen, also vom Außenumfang des Spreizdübels, bis zum Spreizkanal verlaufen.

Durch das Einbringen eines Spreizkörpers in den Spreizkanal sind die beiden Spreizelemente aufspreizbar, das heißt, sie werden durch den Spreizkörper voneinander weg und, in Bezug auf die Mittellängsachse, in radialer Richtung nach außen bewegt. Um ein ungewolltes Aufspreizen zu vermeiden, sind die beiden Spreizelemente durch mindestens einen stegartigen Verbinder einstückig miteinander verbunden, insbesondere in einem in Einbringrichtung vorderen Abschnitt des Spreizdübels. Der stegartige Verbinder ist im Schlitz zwischen den beiden Spreizelementen angeordnet. Er wird somit von der Medianebene vollständig geschnitten. Der "in Einbringrichtung vordere Abschnitt" ist der Abschnitt des Spreizdübels, mit dem voran der Spreizdübel beim planmäßigen Einbringen des Spreizdübels in ein Bohrloch eingeführt wird. Dass der Verbinder "stegartig" ist, meint hier, dass der Verbinder lang gestreckt, also bezogen auf ein kartesisches Koordinatensystem, in einer Richtung um ein Vielfaches größer als in die anderen Richtungen ist. Insbesondere ist der Verbinder in Richtung der Mittellängsachse um ein Vielfaches größer als radial zur Mittellängsachse. Insbesondere weist der stegartige Verbinder einen im Wesentlichen rechteckigen Querschnitt auf. Der Verbinder kann gerade verlaufen oder in sich gekrümmt oder gewellt sein.

Erfindungsgemäß weist der Verbinder mindestens einen Abschnitt auf, nachfolgend "erster Abschnitt" genannt, der in einem spitzen Winkel, nachfolgend "erster spitzer Winkel" genannt, zur Mittellängsachse geneigt ist. Der erste Abschnitt ist derart in dem ersten spitzen Winkel zur Mittellängsachse geneigt, dass die Mittellängsachse diesen Abschnitt in mindestens einem Punkt schneidet, insbesondere vollständig, den Verbinder somit durchdringt. Der erste spitze Winkel ist in der Medianebene aufgespannt, das heißt, die Längsachse und eine Gerade, die mit der Längsachse den ersten spitzen Winkel einschließt, liegen beide in der Medianebene.

Die Bezeichnung "erster Abschnitt" beziehungsweise "erster spitzer Winkel" impliziert nicht, dass ein zweiter Abschnitt oder ein zweiter spitzer Winkel vorhanden sein muss. Auch wenn der Abschnitt des Verbinders nachfolgend "erster Abschnitt" genannt wird, so ist es somit für die Erfindung nicht zwingend erforderlich, dass der Verbinder einen zweiten Abschnitt oder weitere Abschnitte aufweist. Als "spitzer Winkel" wird ein Winkel zwischen 0° und 90°, insbesondere ein Winkel zwischen 5° und 60°, verstanden.

Die erfindungsgemäße Ausgestaltung des Spreizdübels hat den Vorteil, dass der Verbinder beim Aufspreizen nicht nur auf Zug belastet wird. Zusätzlich zur Zugbelastung durchtrennt der Spreizkörper den Verbinder, wodurch der Verbinder geschwächt wird. Das Durchtrennen geschieht insbesondere nicht nur punktuell mit der Spitze des Spreizkörpers: Durch die Neigung des Verbinders in einem spitzen Winkel zur Mittellängsachse durchtrennt der Spreizkörper beim Einbringen den Verbinder in Längsrichtung über einen Teil, insbesondere über mehr als 50 % der Länge des Verbinders, insbesondere über einen Großteil seiner Länge, also auf mehr als 75 % seiner Länge, insbesondere vollständig. Ist der Spreizkörper eine Schraube mit Außengewinde, so können zusätzlich oder alternativ zur Spitze die Gewindeflanken in den Verbinder einschneiden und diesen zusätzlich schwächen oder zerstören.

Vorzugsweise weist der Verbinder einen zweiten Abschnitt auf, der in einem zweiten spitzen Winkel zur Mittellängsachse geneigt ist. Der erste und der zweite Abschnitt sind insbesondere in axialer Richtung hintereinander angeordnet. Sie können miteinander sein verbunden oder versetzt zueinander verlaufen, wobei sie in die gleiche Richtung geneigt sein können, insbesondere parallel, also mit dem gleichen Winkel zur Mittellängsachse verlaufen. Vorzugsweise ist der zweite spitze Winkel entgegen dem ersten spitzen Winkel zur Mittellängsachse geneigt. Der zweite spitze Winkel ist ebenfalls in der Medianebene aufgespannt. Durch diese Ausgestaltungen kann die radiale Ausdehnung des Verbinders begrenzt werden, so dass ein möglichst großer Teil des Verbinders vom Spreizkörper beim Einbringen in den Spreizdübel erfasst, aufgerissen, aufgeschnitten oder zumindest eingeschnitten, eingerissen und geschwächt wird. Dabei gehen die beiden Abschnitte insbesondere ineinander über, das heißt, sie weisen insbesondere keinen axialen Abstand zueinander auf, insbesondere sind die beiden Abschnitte verbunden. Insbesondere sind die beiden Abschnitte einstückig. Es können auch mehr als zwei Abschnitte vorhanden sein, wobei bei mehr als zwei Abschnitten insbesondere zwei aneinandergrenzende Abschnitte in entgegengesetzte Richtungen zur Längsachse geneigt sind.

Weiterhin ist bevorzugt, dass der erste spitze Winkel und/oder der zweite spitze Winkel kleiner als 45° und insbesondere kleiner als 30° ist. Damit ist gewährleistet, dass die Schraubenspitze und oder das Gewinde die Abschnitte in Längsrichtung über einen längeren Weg aufschlitzen, aufreißen und/oder aufschneiden. Insbesondere sind der erste und der zweite spitze Winkel gleich groß.

Bei einer bevorzugten Ausgestaltung des erfindungsgemäßen Spreizdübels durchdringt der Spreizkanal den Spreizdübel in Richtung der Mittellängsachse nicht vollständig. Insbesondere ist der Spreizkanal an seinem vorderen Ende geschlossen. Vorzugsweise ist der Verbinder in Richtung der Mittellängsachse in Einbringrichtung vor dem Spreizkanal angeordnet und schließt vorzugsweise den Spreizkanal nach vorne hin ab.

Weiterhin ist bevorzugt, dass die Erstreckung des ersten Abschnitts des Verbinders in Richtung der Mittellängsachse mindestens 5-mal so groß ist, wie seine Erstreckung normal zur Mittellängsachse. Somit ist eine in Richtung der Mittellängsachse gemessene Länge des Abschnitts größer als die radial zur Mittellängsachse gemessene Breite und Höhe des Abschnitts. Das heißt auch, dass die Haupterstreckungsrichtung des ersten Abschnitts die Längsrichtung ist, so dass gewährleistet ist, dass eine zum Aufspreizen in den Spreizdübel eingebrachte Schraube den Abschnitt über einen möglichst großen Bereich kontaktieren und dabei aufschlitzen, aufreißen und/oder aufschneiden kann. Insbesondere weist auch der zweite Abschnitt, sofern ein zweiter Abschnitt vorhanden ist, eine Erstreckung in Richtung der Mittellängsachse auf, die mindestens 5-mal so groß ist, wie seine Erstreckung normal zur Mittellängsachse. Insbesondere sind die Erstreckungen der beiden Abschnitte gleich groß.

Vorzugsweise ist der gesamte Verbinder in einem radial inneren Bereich des Spreizdübels angeordnet, insbesondere mittig. Das bedeutet, dass sich der Verbinder nicht bis radial nach außen erstreckt. Somit ist gewährleistet, dass zumindest ein Großteil des Verbinders, insbesondere der gesamte Verbinder mit dem Spreizkörper in Kontakt kommt.

Vorzugsweise ist mindestens ein Teil des Verbinders, insbesondere ein gesamter Abschnitt, insbesondere, falls der Verbinder mehrere Abschnitte umfasst, sind mehrere, insbesondere alle Abschnitte, eine Spritzhaut. Mit "Spritzhaut" ist hier ein dünnwandiger Verbinder gemeint, mit einer Wanddicke von kleiner als 0,5 Millimetern.

Der erfindungsgemäße Spreizdübel bildet mit einem Spreizkörper, der eine Spitze aufweist, ein Befestigungssystem. Ein "Spreizkörper" ist beispielsweise ein Nagel, insbesondere ist er eine Schraube, beispielsweise eine Holz- oder Spanplattenschraube mit einem Gewinde mit Gewindeflanken. Dieser Spreizkörper ist planmäßig mit der Spitze voran in den Spreizkanal entlang der Längsachse des Spreizdübels, also in Einbringrichtung, zum planmäßigen Aufspreizen des Spreizbereichs des Spreizdübels einbringbar. Erfindungsgemäß ist der Spreizkanal derart gestaltet, dass die Spitze des Spreizkörpers beim Einbringen auf der Mittellängsachse angeordnet ist, so dass gewährleistet ist, dass der Spreizkörper auf den Verbinder trifft, diesen erfasst und der Verbinder beim weiteren Einbringen des Spreizkörpers durch diesen, insbesondere durch seine Spitze und/oder, soweit vorhanden, durch Gewindeflanken, aufgerissen, aufgeschnitten und dadurch zerstört oder zumindest eingeschnitten, eingerissen und geschwächt wird, so dass der Spreizdübel leicht aufspreizen kann.

Vorzugsweise sind der Verbinder und der Spreizkanal derart angeordnet, dass die Spitze des Spreizkörpers beim Einbringen erst dann auf den Verbinder trifft, wenn der Spreizkörper den Spreizkanal in Richtung der Mittellängsachse vollständig ausfüllt. Hierdurch hat der Spreizkörper ausreichend Halt im Spreizkanal und bei einer Schraube als Spreizkörper ist dadurch ein ausreichender Vortrieb sichergestellt, um den Verbinder zu durchdringen beziehungsweise ihn zu schwächen oder vollständig zu zerstören.

Die vorstehend in der Beschreibung genannten Merkmale und Merkmalskombinationen, Ausführungen und Ausgestaltungen der Erfindung, sowie die nachfolgend in der Figurenbeschreibung genannten und/oder in einer Figur gezeichneten Merkmale und Merkmalskombinationen sind nicht nur in der jeweils angegebenen oder gezeichneten Kombination, sondern auch in grundsätzlich beliebigen anderen Kombinationen oder aber einzeln verwendbar. Es sind Ausführungen der Erfindung möglich, die nicht alle Merkmale eines abhängigen Anspruchs aufweisen. Auch können einzelne Merkmale eines Anspruchs durch andere offenbarte Merkmale oder Merkmalskombinationen ersetzt werden.

Die Erfindung wird nachfolgend anhand eines Ausführungsbeispiels näher erläutert.

Es zeigen:
- Figur 1: Ein erfindungsgemäßer Spreizdübel in einer perspektivischen Ansicht;
- Figur 2: einen Axialschnitt durch den erfindungsgemäßen Spreizdübel ohne einen Spreizkörper; und
- Figur 3: den Axialschnitt der Figur 2 mit einer in den Spreizkanal eingeführten Schraube als Spreizkörper.

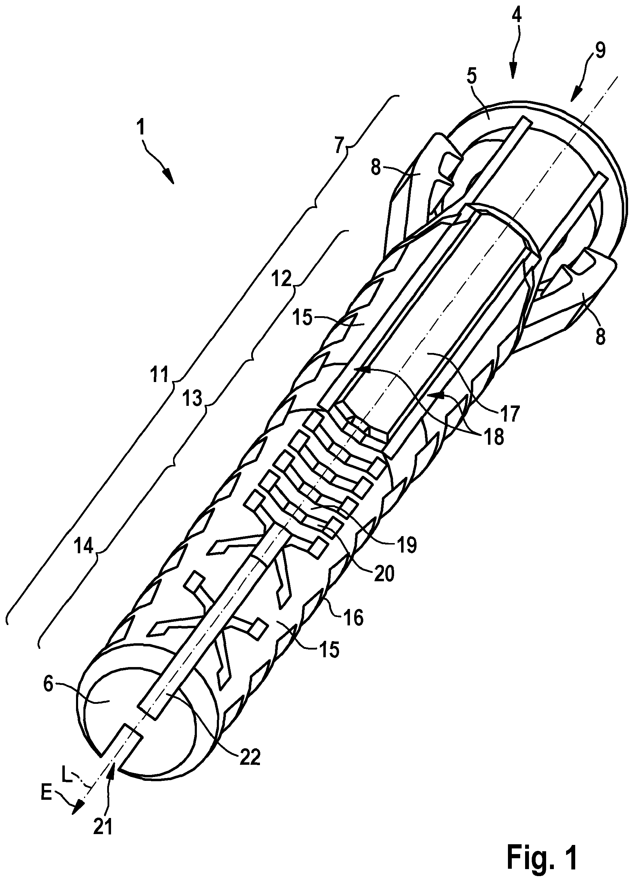

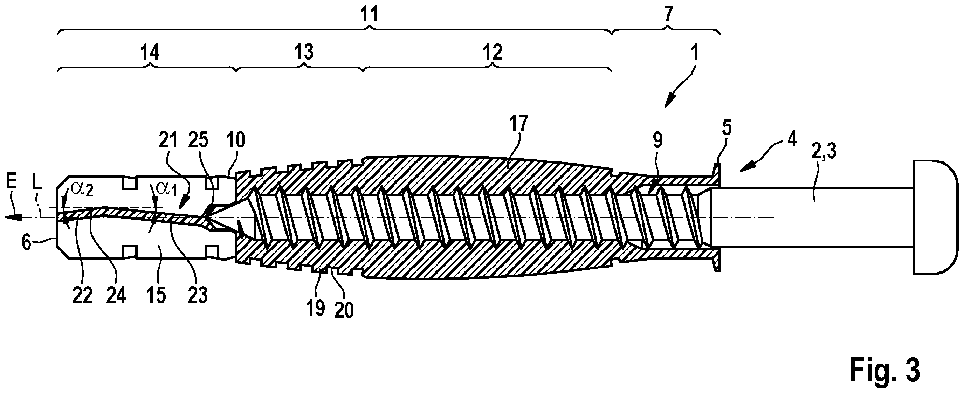

In den Figuren 1 bis 3 ist ein erfindungsgemäßer Spreizdübel 1 dargestellt, der mit dem in Figur 3 eingezeichneten Spreizkörper 2, im Ausführungsbeispiel eine Schraube 3, ein erfindungsgemäßes Befestigungssystem bildet.

Der Spreizdübel 1 erstreckt sich entlang einer Mittellängsachse L von einem hinteren Ende 4, an dem ein umlaufender Bund 5 angeordnet ist, axial zu einem in einer Einbringrichtung E vorderen Ende 6, einer abgeflachten Spitze des Spreizdübels 1, mit dem voran der Spreizdübel 1 bei planmäßigem Einbringen in ein Bohrloch (nicht dargestellt) eingeführt wird.

An den Bund 5 schließt sich nach vorne ein hülsenförmiger Haltebereich 7 an, an dem an sich gegenüberliegenden Stellen zwei radial abstehende Haltearme 8 angeordnet sind, die den Spreizdübel 1 nach dem Einbringen in das Bohrloch im Bohrloch sowie die Schraube 3 nach dem Einstecken in den Haltebereich 7 und vor dem weiteren Einschrauben der Schraube 3 im Spreizkanal 9 halten, da die beiden Haltearme 8 nach dem Einbringen in das Bohrloch teilweise nach innen, in einen Spreizkanal 9 des Spreizdübels 1 eingeschwenkt sind. Der Spreizkanal 9 verläuft konzentrisch zu und entlang der Mittellängsachse L des Spreizdübels 1.

An den Haltebereich 7 schließt sich nach vorne ein Spreizbereich 11 an, der bis zum vorderen Ende 6 des Spreizdübels 1 reicht und das vordere Ende 6 umfasst. Der Spreizbereich 11 umfasst drei Teile: einen hinteren Teil 12, der an den Haltebereich 7 grenzt, einen vorderen Teil 14 mit dem vorderen Ende 6 und dazwischen einen mittleren Teil 13.

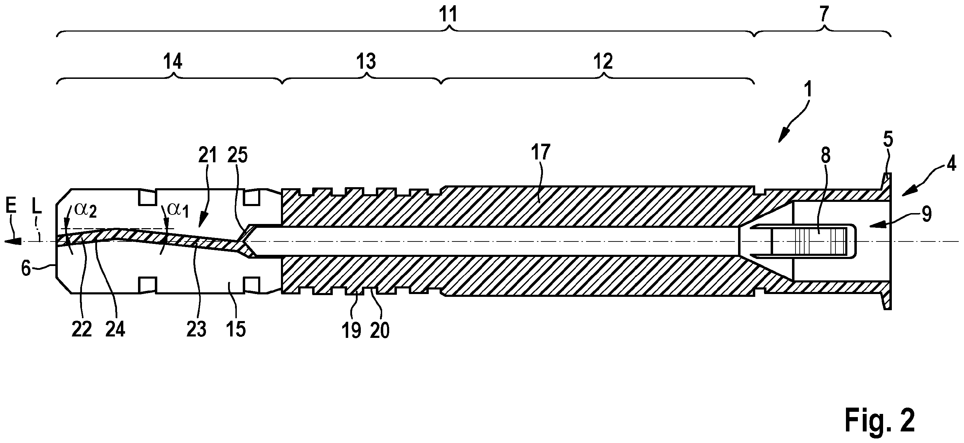

Der hintere Teil 12 des Spreizbereichs 11 umfasst zwei Spreizelemente 15, die Rippen 16 auf ihrer Außenseite aufweisen und die sich bis zum vorderen Ende 6 des Spreizdübels 1 erstrecken. Die Spreizelemente 15 sind somit auch Bestandteile des mittleren Teils 13 und des vorderen Teils 14. In Umfangsrichtung zwischen den beiden Spreizelementen 15 sind im hinteren Teil 12 zwei Spreizschenkel 17 angeordnet, die von den Spreizelementen 15 durch jeweils zwei hintere Längsschlitze 18 in Umfangsrichtung beabstandet sind. Die Spreizschenkel 17 und die Spreizelemente 15 weisen jeweils eine, bezogen auf die Mittellängsachse L, radiale Dicke auf, die größer ist als die radiale Wandstärke des hülsenartigen Haltebereichs 7, wie sie in Figur 2 zu sehen ist, und daher den Spreizkanal 9 verengen. Die beiden Spreizelemente 15 umschließen gemeinsam mit den Spreizschenkeln 17 den Spreizkanal 9, so dass eine Schraube 3 beim Einbringen in den Spreizkanal 9 geführt ist.

Im mittleren Teil 13 des Spreizbereichs 11 sind die beiden Spreizelemente 15 durch V-förmige Verbindungsstege 19 in Umfangsrichtung verbunden. Zwischen den Verbindungsstegen 19 sind in Längsrichtung hintereinander Öffnungen 20 angeordnet, die durch dünne Wände aus Kunststoff flächig verschlossen sind. In diesem mittleren Teil 13 weist der Spreizkanal 9 denselben Innendurchmesser auf, wie im hinteren Teil 12 des Spreizbereichs 11.

Im vorderen Teil 14 des Spreizbereichs 11 sind die beiden Spreizelemente 15 mit größerer Wandstärke halbzylinderförmig ausgeführt und nur durch einen durchgehenden, in einer Axialebene zur Mittellängsachse L flächig verlaufenden Schlitz 21 getrennt, der eine Weite von 0,5 Millimeter aufweist. Der Schlitz 21 definiert eine Medianebene, in der die Längsachse L liegt. Die Medianebene entspricht der Zeichenebene der Figuren 2 und 3. In dem Schlitz 21 ist eine dünnwandige Spritzhaut mit einer Dicke von weniger als 0,5 Millimeter als ein langgestreckter, sich über fast die gesamte Länge des vorderen Teils 14 von circa 16 Millimetern erstreckender, stegartiger Verbinder 22 angeordnet, mit dem die beiden Spreizelemente 15 einstückig miteinander verbunden sind. Wie in den Figuren 2 und 3 zu sehen ist, ist der Verbinder 22 mittig im Spreizdübel 1, das heißt in einem radial inneren Bereich des Spreizdübels 1, angeordnet. Der Verbinder 22 weist zwei in Längsrichtung hintereinander angeordnete Abschnitte 23, 24 auf, die beide um zwei spitze Winkel α₁, α₂ von circa 10°, aber einander entgegengesetzt, zur Mittellängsachse L geneigt sind. Beide Abschnitte 23, 24 des Verbinders 22 sind derart mittig angeordnet, dass die Mittellängsachse L beide aufgrund ihrer Neigung um die beiden spitzen Winkel α₁, α₂ jeweils in mindestens einem Punkt schneidet, wie dies in den Figuren 2 und 3 zu sehen ist. Der erste Abschnitt 23 und der in Einbringrichtung E davor angeordnete zweite Abschnitt 24, der sich bis zum vorderen Ende 6 des Spreizdübels 1 erstreckt, gehen einstückig ineinander über. Die axiale Länge des ersten Abschnitts 23 des Verbinders 22 beträgt circa 12 Millimeter, die des zweiten Abschnitts 24 circa 4 Millimeter.

Der Spreizkanal 9 durchdringt den Spreizdübel 1 in Richtung der Mittellängsachse L nicht vollständig, sondern er endet im vorderen Teil 14 des Spreizbereichs 11 mit Abstand vom vorderen Ende 6, nämlich dort, wo der Verbinder 22 beginnt. Der Verbinder 22 ist in Richtung der Mittellängsachse L in Einbringrichtung (E) vor dem Spreizkanal 9 angeordnet und schließt ihn nach vorne hin durch eine radiale Erweiterung 25 ab.

Der gesamte Spreizdübel 1 ist aus einem Polyamid im Spritzgussverfahren einstückig hergestellt.

Wird die Schraube 3 in den Spreizdübel 1 eingebracht, so spreizt die Schraube 3 als Spreizkörper 2 den Spreizdübel 1 in radialer Richtung auf, wie dies in Figur 3 zu sehen ist. In Figur 3 ist die Schraube 3 mit ihrem Gewinde vollständig in den Spreizkanal 9 eingeschraubt, so dass die Schraube 3 den Spreizkanal 9 in Richtung der Mittellängsachse L vollständig ausfüllt. Die Spitze 10 der Schraube 3 liegt am hinteren Ende des Verbinders 22 an, das heißt an der radialen Erweiterung 25. Aufgrund der Gestaltung des Spreizkanals 9 ist die Spitze 10 der Schraube 3 beziehungsweise des Spreizkörpers 2 beim Einbringen auf der Mittellängsachse L angeordnet, so dass die Spitze 10 beim weiteren Einschrauben der Schraube 3 zuerst die radiale Erweiterung 25, dann den ersten Abschnitt 23 und dann den zweiten Abschnitt 24 des Verbinders 22 axial durchdringt und den gesamten Verbinder 22, dessen radiale Ausdehnung kleiner als der Durchmesser der Schraube 3 ist, aufreißt und zerstört, so dass der Verbinder 22 seine Funktion, die beiden Spreizelemente 15 zu verbinden, nicht mehr ausüben kann. Nach dem planmäßigen Einbringen des Spreizdübels 1 in das Bohrloch ist diese Funktion auch nicht mehr notwendig. Im Gegenteil würde hier der Verbinder 22 das Aufspreizen zumindest des vorderen Teils 14 des Spreizbereichs behindern, weshalb das Zerstören des Verbinders 22 beim Einschrauben der Schraube 3 vorteilhaft ist, da dadurch das Aufspreizen erleichtert und das zum Einschrauben der Schraube 3 notwendige Drehmoment verringert wird, was die Montagefreundlichkeit des erfindungsgemäßen Spreizdübels 1 verbessert.

### Bezugszeichenliste

- 1: Spreizdübel
- 2: Spreizkörper
- 3: Schraube
- 4: hinteres Ende des Spreizdübels 1
- 5: Bund
- 6: vorderes Ende des Spreizdübels 1
- 7: Haltebereich
- 8: Haltearm
- 9: Spreizkanal
- 10: Spitze der Schraube 3 bzw. des Spreizkörpers 2
- 11: Spreizbereich
- 12: hinterer Teil des Spreizbereichs 11
- 13: mittlerer Teil des Spreizbereichs 11
- 14: vorderer Teil des Spreizbereichs 11
- 15: Spreizelement
- 16: Rippe
- 17: Spreizschenkel
- 18: hinterer Längsschlitz
- 19: Verbindungssteg
- 20: Öffnung
- 21: Schlitz
- 22: Verbinder
- 23: erster Abschnitt des Verbinders 22
- 24: zweiter Abschnitt des Verbinders 22
- 25: radiale Erweiterung des Verbinders 22
- α₁: erster spitzer Winkel
- α₂: zweiter spitzer Winkel
- E: Einbringrichtung
- L: Mittellängsachse

## Patentansprüche

1. Spreizdübel (1) aus Kunststoff,
der in einem Spreizbereich (11) mindestens zwei Spreizelemente (15) aufweist, die durch das Einbringen eines Spreizkörpers (2) in einen Spreizkanal (9) des Spreizdübels (1) aufspreizbar sind,
wobei sich der Spreizkanal (9) konzentrisch zu und entlang einer Mittellängsachse (L) des Spreizdübels (1) erstreckt,
wobei die Spreizelemente (15) durch einen Schlitz (21) voneinander getrennt sind, der eine Medianebene zwischen den Spreizelementen (15) definiert, in der die Längsachse (L) liegt, und
wobei die Spreizelemente (15) durch mindestens einen stegartigen Verbinder (22) einstückig miteinander verbunden sind, der im Schlitz (21) zwischen den beiden Spreizelementen (15) angeordnet ist,
**dadurch gekennzeichnet,**
**dass** der Verbinder (22) mindestens einen ersten Abschnitt (23) aufweist, der in einem ersten spitzen Winkel (α₁) zur Mittellängsachse (L) geneigt ist, derart, dass die Mittellängsachse (L) den ersten Abschnitt (23) in mindestens einem Punkt schneidet.

2. Spreizdübel nach Anspruch 1, **dadurch gekennzeichnet, dass** der Verbinder (22) einen zweiten Abschnitt (24) aufweist, der in einem zweiten spitzen Winkel (α₂) zur Mittellängsachse (L) geneigt ist.

3. Spreizdübel nach Anspruch 2, **dadurch gekennzeichnet, dass** der zweite spitze Winkel (α₂) entgegen dem ersten spitzen Winkel (α₁) zur Mittellängsachse (L) geneigt ist.

4. Spreizdübel nach einem der vorstehenden Ansprüche, **dadurch gekennzeichnet, dass** der erste spitze Winkel (α₁) kleiner als 45° ist.

5. Spreizdübel nach einem der Ansprüche 2 bis 4, **dadurch gekennzeichnet, dass** der zweite spitze Winkel (α₂) kleiner als 45° ist.

6. Spreizdübel nach einem der vorstehenden Ansprüche, **dadurch gekennzeichnet, dass** der Spreizkanal (9) den Spreizdübel (1) in Richtung der Mittellängsachse (L) nicht vollständig durchdringt.

7. Spreizdübel nach Anspruch 6, **dadurch gekennzeichnet, dass** der Verbinder (22) in Richtung der Mittellängsachse (L) in Einbringrichtung (E) vor dem Spreizkanal (9) angeordnet ist.

8. Spreizdübel nach einem der vorstehenden Ansprüche, **dadurch gekennzeichnet, dass** der Verbinder (22) den Spreizkanal (9) in Einbringrichtung (E) nach vorne hin abschließt.

9. Spreizdübel nach einem der vorstehenden Ansprüche, **dadurch gekennzeichnet, dass** die Erstreckung des ersten Abschnitts (23) des Verbinders (22) in Richtung der Mittellängsachse (L) mindestens 5-mal so groß ist, wie die Erstreckung des ersten Abschnitts (23) normal zur Mittelängsachse (L).

10. Spreizdübel nach einem der vorstehenden Ansprüche, **dadurch gekennzeichnet, dass** der gesamte Verbinder (22) in einem radial inneren Bereich des Spreizdübels (1) angeordnet ist, insbesondere mittig.

11. Spreizdübel nach einem der vorstehenden Ansprüche, **dadurch gekennzeichnet, dass** mindestens ein Teil des Verbinders (22) eine Spritzhaut ist.

12. Befestigungssystem mit einem Spreizdübel (1) nach einem der vorstehenden Ansprüche und einem Spreizkörper (2), der eine Spitze (10) aufweist, mit der voran der Spreizkörper (2) in den Spreizkanal (9) entlang der Mittellängsachse (L) zum planmäßigen Aufspreizen des Spreizbereichs (11) des Spreizdübels (1) einbringbar ist,
**dadurch gekennzeichnet,**
**dass** der Spreizkanal (9) derart gestaltet ist, dass die Spitze (10) des Spreizkörpers (2) beim Einbringen auf der Mittellängsachse (L) angeordnet ist.

13. Befestigungssystem nach Anspruch 12, **dadurch gekennzeichnet, dass** der Verbinder (22) und der Spreizkanal (9) derart angeordnet sind, dass die Spitze (10) des Spreizkörpers (2) beim Einbringen erst dann auf den Verbinder (22) trifft, wenn der Spreizkörper (2) den Spreizkanal (9) in Richtung der Mittellängsachse (L) vollständig ausfüllt.

## Claims

1. An expansion dowel (1) made of plastic,
which has at least two expansion elements (15) in an expansion region (11) which can be expanded by introducing an expansion body (2) into an expansion channel (9) of the expansion dowel (1),
wherein the expansion channel (9) extends concentrically to and along a central longitudinal axis (L) of the expansion dowel (1),
wherein the expansion elements (15) are separated from one another by a slot (21), which defines a median plane between the expansion elements (15) in which the longitudinal axis (L) lies, and
wherein the expansion elements (15) are integrally connected to one another by at least one web-like connector (22), which is arranged in the slot (21) between the two expansion elements (15),
**characterized in that**
the connector (22) has at least a first portion (23), which is inclined at a first acute angle (α₁) to the central longitudinal axis (L) such that the central longitudinal axis (L) intersects the first portion (23) at least at one point.

2. The expansion dowel according to claim 1, **characterized in that** the connector (22) has a second portion (24), which is inclined at a second acute angle (α₂) to the central longitudinal axis (L).

3. The expansion dowel according to claim 2, **characterized in that** the second acute angle (α₂) is inclined opposite the first acute angle (α₁) to the central longitudinal axis (L).

4. The expansion dowel according to one of the preceding claims, **characterized in that** the first acute angle (α₁) is less than 45°.

5. The expansion dowel according to one of claims 2 to 4,
**characterized in that** the second acute angle (α₂) is less than 45°.

6. The expansion dowel according to one of the preceding claims, **characterized in that** the expansion channel (9) does not completely penetrate the expansion dowel (1) in the direction of the central longitudinal axis (L).

7. The expansion dowel according to claim 6, **characterized in that** the connector (22) is arranged in the direction of the central longitudinal axis (L) in the insertion direction (E) in front of the expansion channel (9).

8. The expansion dowel according to one of the preceding claims, **characterized in that** the connector (22) closes the expansion channel (9) towards the front in the insertion direction (E).

9. The expansion dowel according to one of the preceding claims, **characterized in that** the extension of the first portion (23) of the connector (22) in the direction of the central longitudinal axis (L) is at least 5 times as large as the extension of the first portion (23) normal to the central longitudinal axis (L).

10. The expansion dowel according to one of the preceding claims, **characterized in that** the entire connector (22) is arranged in a radially inner region of the expansion dowel (1), in particular centrally.

11. The expansion dowel according to one of the preceding claims, **characterized in that** at least a part of the connector (22) is flash.

12. A fastening system with an expansion dowel (1) according to one of the preceding claims and an expansion body (2), which has a tip (10) with which the expansion body (2) can be introduced at the front into the expansion channel (9) along the central longitudinal axis (L) for the planned expansion of the expansion region (11) of the expansion dowel (1),
**characterized in that**
the expansion channel (9) is designed such that the tip (10) of the expansion body (2) is arranged on the central longitudinal axis (L) during insertion.

13. The fastening system according to claim 12, **characterized in that** the connector (22) and the expansion channel (9) are arranged such that the tip (10) of the expansion body (2) only hits the connector (22) during insertion if the expansion body (2) completely fills the expansion channel (9) in the direction of the central longitudinal axis (L).

## Revendications

1. Cheville à expansion (1) en plastique,
qui présente, dans une zone expansible (11), au moins deux éléments expansibles (15) qui peuvent être écartés par l'introduction d'un corps d'expansion (2) dans un canal expansible (9) de la cheville à expansion (1),
dans laquelle le canal expansible (9) s'étend concentriquement à un axe longitudinal central (L) de la cheville à expansion (1) et le long de celui-ci,
dans laquelle les éléments expansibles (15) sont séparés les uns des autres par une fente (21) qui définit, entre les éléments expansibles (15), un plan médian dans lequel se trouve l'axe longitudinal (L), et
dans laquelle les éléments expansibles (15) sont reliés entre eux d'un seul tenant par au moins un connecteur (22) en forme de barrette, lequel connecteur est disposé dans la fente (21) entre les deux éléments expansibles (15),
**caractérisée en ce que**
le connecteur (22) présente au moins une première section (23) qui est inclinée selon un premier angle aigu (α₁) par rapport à l'axe longitudinal central (L), de telle sorte que l'axe longitudinal central (L) coupe la première section (23) en au moins un point.

2. Cheville à expansion selon la revendication 1, **caractérisée en ce que** le connecteur (22) présente une seconde section (24) qui est inclinée selon un second angle aigu (α₂) par rapport à l'axe longitudinal central (L).

3. Cheville à expansion selon la revendication 2, **caractérisée en ce que** le second angle aigu (α₂) est incliné par rapport à l'axe longitudinal central (L) à l'opposé du premier angle aigu (α₁).

4. Cheville à expansion selon l'une des revendications précédentes, **caractérisée en ce que** le premier angle aigu (α₁) est inférieur à 45°.

5. Cheville à expansion selon l'une des revendications 2 à 4,
**caractérisée en ce que** le second angle aigu (α₂) est inférieur à 45°.

6. Cheville à expansion selon l'une des revendications précédentes, **caractérisée en ce que** le canal expansible (9) ne traverse pas complètement la cheville à expansion (1) dans la direction de l'axe longitudinal central (L).

7. Cheville à expansion selon la revendication 6, **caractérisée en ce que** le connecteur (22) est disposé en amont du canal expansible (9) dans la direction de l'axe longitudinal central (L), dans la direction d'introduction (E).

8. Cheville à expansion selon l'une des revendications précédentes, **caractérisée en ce que** le connecteur (22) ferme le canal expansible (9) vers l'avant dans la direction d'introduction (E).

9. Cheville à expansion selon l'une des revendications précédentes, **caractérisée en ce que** l'extension de la première section (23) du connecteur (22) dans la direction de l'axe longitudinal central (L) est au moins 5 fois plus grande que l'extension de la première section (23) perpendiculairement à l'axe longitudinal central (L).

10. Cheville à expansion selon l'une des revendications précédentes, **caractérisée en ce que** l'ensemble du connecteur (22) est disposé dans une zone radialement intérieure de la cheville à expansion (1), notamment au centre.

11. Cheville à expansion selon l'une des revendications précédentes, **caractérisée en ce qu'**au moins une partie du connecteur (22) est une peau d'injection.

12. Système de fixation comportant une cheville à expansion (1) selon l'une des revendications précédentes et un corps d'expansion (2) qui présente une pointe (10) avec laquelle le corps d'expansion (2) peut être introduit en avant dans le canal expansible (9) le long de l'axe longitudinal central (L) pour l'expansion plane de la zone expansible (11) de la cheville à expansion (1),
**caractérisé en ce que**
le canal expansible (9) est conçu de telle sorte que la pointe (10) du corps d'expansion (2) est disposée sur l'axe longitudinal central (L) lors de l'introduction.

13. Système de fixation selon la revendication 12, **caractérisé en ce que** le connecteur (22) et le canal expansible (9) sont disposés de telle sorte que la pointe (10) du corps d'expansion (2) ne rejoint le connecteur (22) lors de l'introduction que lorsque le corps d'expansion (2) remplit complètement le canal expansible (9) dans la direction de l'axe longitudinal central (L).
